# EUROPÄISCHE PATENTSCHRIFT

(11) **EP 3 623 849 B1**
(45) Veröffentlichungstag und Bekanntmachung des Hinweises auf die Patenterteilung: **18.01.2023**
(21) Anmeldenummer: 18194054.5
(22) Anmeldetag: 12.09.2018
(51) Int. Cl.: G01V 8/18, G01S 17/42, F16P 3/14, G01S 7/497

(54) **OPTISCHER SENSOR**
OPTICAL SENSOR
CAPTEUR OPTIQUE

(43) Veröffentlichungstag der Anmeldung: 18.03.2020
(73) Patentinhaber: Leuze electronic GmbH + Co. KG, 73277 Owen/Teck (DE)
(72) Erfinder: FELLER, Bernhard, 86316 Friedberg (DE)
(74) Vertreter: Ruckh, Rainer Gerhard

(56) Entgegenhaltungen:
- EP-A1- 3 367 135
- DE-C2- 19 706 612
- JP-A- H10 142 335
- US-A- 5 949 530
- US-A1- 2011 286 009
- US-A1- 2013 250 302

## Beschreibung

Die Erfindung betrifft einen optischen Sensor gemäß dem Oberbegriff des Anspruchs 1.

Derartige Sensoren dienen generell zur Erfassung von Objekten in einem Überwachungsbereich.

Die optische Sensoren können insbesondere als scannende Sensoren, insbesondere scannende Distanzsensoren, ausgebildet sein, mittels derer ein flächiger Überwachungsbereich hinsichtlich eines Eindringens eines Objekts überwacht werden kann. Alternativ können die optische Sensoren auch Sende-/Empfangseinheiten aufweisen, die Lichtstrahlen in eine fest vorgegebene, unveränderliche Raumrichtung emittieren.

Die so ausgebildeten optischen Sensoren werden insbesondere im Bereich der Sicherheitstechnik eingesetzt, um Gefahrenbereiche an stationären Anlagen oder im Vorfeld von Fahrzeugen, insbesondere fahrerlosen Transportfahrzeugen, zu überwachen.

Um die Anforderungen im Bereich der Sicherheitstechnik zu erfüllen, muss der optische Sensor einen entsprechend fehlersicheren Aufbau aufweisen.

Ein generelles Problem bei derartigen optischen Sensoren, nicht nur im Bereich der Sicherheitstechnik, besteht darin, dass dessen Funktionsfähigkeit durch externe Umgebungseinflüsse beeinträchtigt werden kann, so dass keine sichere Objektdetektion mehr möglich ist.

Dies gilt insbesondere für die Scheibe des Gehäuses des optischen Sensors, durch welche die Lichtstrahlen der Sende-/Empfangseinheit geführt sind, um Objekte im Überwachungsbereich detektieren zu können. Durch Verschmutzungen, Feuchtigkeit oder auch mechanische Beeinträchtigungen wie Risse oder Kratzer in der Scheibe kann die Durchlässigkeit der Scheibe reduziert sein, was zur Folge hat, dass die Lichtstrahlen der Sende-/Empfangseinheit nicht mehr ungehindert durch die Scheibe geführt werden.

Um derartige Beeinträchtigungen erfassen zu können, ist es bekannt, eine Testeinheit einzusetzen, mittels derer der Zustand der Scheibe erfasst werden kann. Wird dann mit der Testeinheit eine solche Beeinträchtigung registriert, kann eine Warn- oder Störmeldung generiert werden, worauf ein Benutzer entsprechende Wartungsmaßnahmen einleiten kann.

Ein derartiger optischer Sensor ist aus der DE 197 06 612 C2 bekannt.

Der dort beschriebene optische Sensor umfasst ein in einem Gehäuse integriertes, Sendelichtstrahlen emittierendes erstes Sendeelement, wobei die Sendelichtstrahlen über eine Ablenkeinheit innerhalb eines vorgegebenen Winkelbereichs periodisch abgelenkt sind, parallel zu einer Fläche durch ein Austrittsfenster aus dem Gehäuse geführt sind und den Überwachungsbereich überstreichen. Von einem Objekt remittiertes Licht wird über das Austrittsfenster und die Ablenkeinheit zu einem Empfangselement geführt. Zur Kontrolle der Verschmutzung des zu der Fläche schräg verlaufenden Austrittsfensters werden von einem zweiten Sendeelement Testsendelichtstrahlen emittiert, welche über mit der Ablenkeinheit rotierende Umlenkmittel derart abgelenkt werden, dass diese am Strahlausgang der Umlenkmittel an einem in Drehrichtung der Ablenkeinheit verlaufenden Rand des Austrittsfensters austreten und dieses in im wesentlichen senkrechter Richtung zu der Fläche wenigstens einmal durchsetzen. Die am Rand des Austrittsfensters austretenden Testsendelichtstrahlen werden über die mit der Ablenkeinheit mitrotierenden Umlenkmittel einem zweiten Empfangselement zugeführt, so dass die dort auftreffende Lichtmenge als Maß für die Verschmutzung des Austrittsfensters auswertbar ist.

Die US 2011/0286009 A1 betrifft einen optischen Sensor zur Erfassung von Objekten innerhalb eines Überwachungsbereichs, mit einer innerhalb eines Gehäuses angeordneten, um eine Drehachse drehbaren Sende-/Empfangseinheit, umfassend einen Sendelichtstrahlen emittierenden Sender und einen Empfangslichtstrahlen empfangenden Empfänger, wobei die Sendelichtstrahlen und/oder die Empfangslichtstrahlen durch ein Fenster des Gehäuses geführt sind, welches ein optisches Mittel zur Strahlformung der Sendelichtstrahlen und/oder Empfangslichtstrahlen bildet. Am Fenster ist ein Referenzobjekt angeordnet, welches ein Ziel für Referenzmessungen zur Funktionsprüfung der Sende-/Empfangseinheit ist. Weiterhin ist im Sensor ein Sensorelement zur Fensterüberwachung integriert.

Der Erfindung liegt die Aufgabe zugrunde, einen optischen Sensor mit hoher Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Ein wesentlicher Vorteil der Erfindung besteht darin, dass mit der Testeinheit eine vollständige Überprüfung der Scheibe hinsichtlich Beeinträchtigungen wie Verschmutzungen und Beschädigungen erreicht wird.

Im einfachsten Fall reicht hierzu eine Testeinheit mit nur einem Testsender und einem Testdetektor aus. Dies ist insbesondere dann der Fall, wenn der optische Sensor eine Sende-/Empfangseinheit aufweist, die Lichtstrahlen in einer fest vorgegebenen, unveränderlichen Raumrichtung emittiert. Dann kann die Scheibe so klein sein, dass diese mit einer solchen Testeinheit vollständig auf Verschmutzungen überwacht werden kann.

Insbesondere bei scannenden optischen Sensoren, bei welchen die Lichtstrahlen in einem vorgegebenen Raumbereich periodisch abgelenkt werden, ist eine größere Scheibe vorgesehen, die sich über einen ausgedehnten Winkelbereich des Gehäuses erstreckt.

In diesem Fall weist die Testeinheit eine Mehrfachanordnung von Testlichtstrahlen emittierenden Testsendern und Testdetektoren auf, wobei jedem Testsender ein oder mehrere Testdetektoren zur Überprüfung der Durchlässigkeit unterschiedlicher Bereiche der Scheibe zugeordnet ist beziehungsweise sind.

Dabei bilden die Testsender mit den zugeordneten Testdetektoren Module, die zeitlich versetzt oder parallel aktiviert sind.

Die vollständige Überprüfung der Scheibe wird dann dadurch erreicht, dass mehrere Testsender so angeordnet sind, dass die von ihnen emittierten Testlichtstrahlen unterschiedliche Bereiche der Scheibe durchsetzen, wobei vorteilhaft diese unterschiedlichen Bereiche die gesamte Scheibe abdecken. Durch die Zuordnung von wenigstens einem Testdetektor in vorgegebenen Detektionspositionen zu den einzelnen Testsendern können die bei der Scheibenüberwachung von der Reflektoreinheit zurückreflektierten Testlichtstrahlen erfasst werden, wobei die dadurch generierten Empfangssignale ein genaues Maß dafür geben, ob eine Beeinträchtigung der Scheibe vorliegt oder nicht.

Durch die so gestaltete Scheibenüberwachung wird die Funktionssicherheit des optischen Sensors erheblich erhöht.

Die Funktionssicherheit des optischen Sensors wird erfindungsgemäß dadurch erhöht, dass mit dem Referenzelement eine Fehlerkontrolle der Testeinheit erfolgt.

Vorteilhaft ist die Fehlerkontrolle in Form einer Korrektur von Temperaturabhängigkeit oder anderen Schwankungen der Eigenschaften der Testeinheit (zum Beispiel Alterung) von mit der Testeinheit durchgeführten Messungen ausgebildet.

Damit können Fehler der Testeinheit aufgrund von Schwankungen deren Bauteile aufgedeckt und kompensiert werden, wodurch eine fehlerfreie Funktion der Testeinheit gewährleistet ist.

Erfindungsgemäß werden mit dem Referenzelement durchgeführte Referenzmessungen Referenzmesswerte für die Messungen zur Überprüfung der Durchlässigkeit der Scheibe gewonnen.

Aus den Referenzmesswerten werden Korrekturfaktoren für die Messungen, die mit der Testeinheit zur Überprüfung der Durchlässigkeit der Scheibe durchgeführt werden, abgeleitet.

Anhand der so gewonnenen Korrekturfaktoren können damit Fehler bei den Messungen zur Verschmutzungskontrolle eliminiert werden.

Dies erfolgt erfindungsgemäß derart, dass mittels der Korrekturfaktoren die Sendeleistung des Testsenders oder die Verstärkung von Empfangssignalen des Testdetektors korrigiert wird. Ebenso kann das Messergebnis rechnerisch korrigiert oder ein Schwellwert zur Bewertung der Empfangssignale entsprechend korrigiert werden.

Ein wesentlicher Vorteil besteht darin, dass die Referenzmessung mit dem Referenzelement fortlaufend während des Betriebs des optischen Sensors durchgeführt werden können, so dass anhand der dabei gewonnenen Korrekturfaktoren die Funktion der Testeinheit fortlaufend überwacht und korrigiert werden kann.

Gemäß einer ersten Variante werden Empfangssignale des Testdetektors zur Fehlerkontrolle herangezogen, wenn vom Referenzelement die Testlichtstrahlen zu diesem reflektiert werden.

Da das Referenzelement eine definierte, bekannte Reflexionshöhe aufweist und zudem dessen Lage zum Testdetektor bekannt ist, werden bei der Messung gegen das Referenzelement definierte Referenzmessungen erhalten, die für eine Kompensation von Temperatureinflüssen der Testeinheit herangezogen werden können.

Gemäß einer zweiten Variante werden Empfangssignale des Testdetektors zur Fehlerkontrolle herangezogen, wenn ein definierter Teil der Testlichtstrahlen das Referenzelement durchsetzt und zum Testdetektor geführt ist.

Da das Referenzelement eine definierte, bekannte Transmission aufweist und zudem dessen Lage zum Testdetektor bekannt ist, werden bei der Messung mit dem Referenzelement definierte Referenzmessungen erhalten, die für eine Kompensation von Temperatureinflüssen der Testeinheit herangezogen werden können.

Gemäß einer ersten Ausgestaltung ist das Referenzelement stationär zum Testdetektor angeordnet.

Diese Variante ist insbesondere dann vorteilhaft, wenn die Sende-/Empfangseinheit Lichtstrahlen in eine fest vorgegebene Raumrichtung emittiert. Bespiele hierfür sind optische Sensoren in Form von Lichttastern oder Distanzsensoren.

In diesem Fall weist die Testeinheit bevorzugt nur einen Testsender und nur einen Testdetektor auf. Das Referenzelement ist dann so positioniert, dass zumindest ein vorgegebener Teil der Testlichtstrahlen auf das Referenzelement trifft.

Weiterhin kann der optische Sensor auch als scannendes System derart ausgebildet sein, dass die Sende-/Empfangseinheit in einem rotierenden Messkopf integriert ist, wobei die Sende-/Empfangseinheit mit dem Messkopf rotiert, wodurch die Lichtstrahlen der Sende-/Empfangseinheit periodisch einen flächigen Überwachungsbereich überwachen, der durch die Größe der Scheibe vorgegeben ist. In diesem Fall weist die Testeinheit mehrere in Umfangsrichtung der Scheibe verteilt und versetzt angeordnete Testsender und Testdetektoren auf. In diesem Fall ist das Referenzelement stationär im Strahlengang der Testlichtstrahlen eines Testsenders angeordnet.

Gemäß einer zweiten Ausgestaltung ist das Referenzelement relativ vom Testdetektor bewegt, so dass das Referenzelement zu vorgegebenen Zeiten in den Strahlengang der Testlichtstrahlen eingebracht ist.

Insbesondere ist das Referenzelement periodisch relativ zum Testdetektor bewegt.

Die Relativbewegung kann generell durch eine Bewegung des Referenzelements oder auch des Testdetektors erreicht werden.

Die Referenzmessungen erfolgen dann vorzugsweise zyklisch nur dann, wenn sich das Referenzelement im Strahlengang der Testlichtstrahlen befindet.

Diese Variante findet vorteilhaft bei scannenden optischen Sensoren Anwendung, bei welchen die Sende-/Empfangseinheit stationär im Gehäuse angeordnet ist, und die Lichtstrahlen über eine um eine Drehachse rotierende Ablenkeinheit geführt sind.

In diesem Fall rotiert das Referenzelement mit der Ablenkeinheit mit, so dass in vorgegebenen Winkelstellungen der Ablenkeinheit das Referenzelement in den Strahlengang der Testlichtstrahlen eingebracht ist.

Bei einem derartigen optischen Sensor überstreichen die Lichtstrahlen der Sende-/Empfangseinheit periodisch einen flächigen Überwachungsbereich, der wiederum durch die Größe der Scheibe bestimmt sein kann. Um die Verschmutzung der Scheibe vollständig zu prüfen, weist die Testeinheit vorteilhaft mehrere in Umfangsrichtung der Scheibe verteilt und versetzt angeordnete Testsender und Testdetektoren auf.

Bei dieser Ausführungsform ist vorteilhaft, dass durch die Bewegung des Referenzelements dieses periodisch nacheinander in den Strahlengang der Testlichtstrahlen aller Testsender eingebracht wird, so dass für alle Testsender Referenzmessungen durchgeführt werden können.

Diese Ausführungsform kann dahingehend noch weiter verbessert werden, dass das Referenzelement örtlich variierende Reflexions- oder Transmissionseigenschaften aufweist, welche für unterschiedliche Messungen zur Fehlerkontrolle der Testeinheit herangezogen werden.

Da somit für das Referenzelement unterschiedliche Referenzmessungen durchgeführt werden können, wird eine noch genauere Fehlerkontrolle ermöglicht.

Die Erfindung wird im Folgenden anhand der Zeichnungen erläutert. Es zeigen:
- Figur 1:: Erstes Ausführungsbeispiel eines optischen Sensors mit einer Sende-/Empfangseinheit, einer Ablenkeinheit, einer Testeinheit und einem ersten Referenzelement
a) bei außerhalb der Testeinheit angeordnetem Referenzelement,
b) bei im Bereich der Testeinheit angeordnetem Referenzelement.
- Figur 2:: Querschnittsdarstellung des optischen Sensors gemäß Figur 1.
- Figur 3:: Blockschaltbild von Komponenten zur Durchführung einer Fehlerkontrolle der Testeinheit des optischen Sensors gemäß Figur 1 oder 2.
- Figur 4:: Zweites Ausführungsbeispiel eines optischen Sensors mit einer Sende-/Empfangseinheit, einer Ablenkeinheit, einer Testeinheit und einem ersten Referenzelement
a) bei außerhalb der Testeinheit angeordnetem Referenzelement,
b) bei im Bereich der Testeinheit angeordnetem Referenzelement
- Figur 5:: Modifizierte Anordnung von Komponenten einer Testeinheit für den optischen Sensor 1 gemäß den Figuren 1 oder 2.
- Figur 6:: Drittes Ausführungsbeispiel eines optischen Sensors mit einer Sende-/Empfangseinheit, einer Ablenkeinheit, einer Testeinheit und einem ersten Referenzelement
a) bei außerhalb der Testeinheit angeordnetem Referenzelement,
b) bei im Bereich der Testeinheit angeordnetem Referenzelement

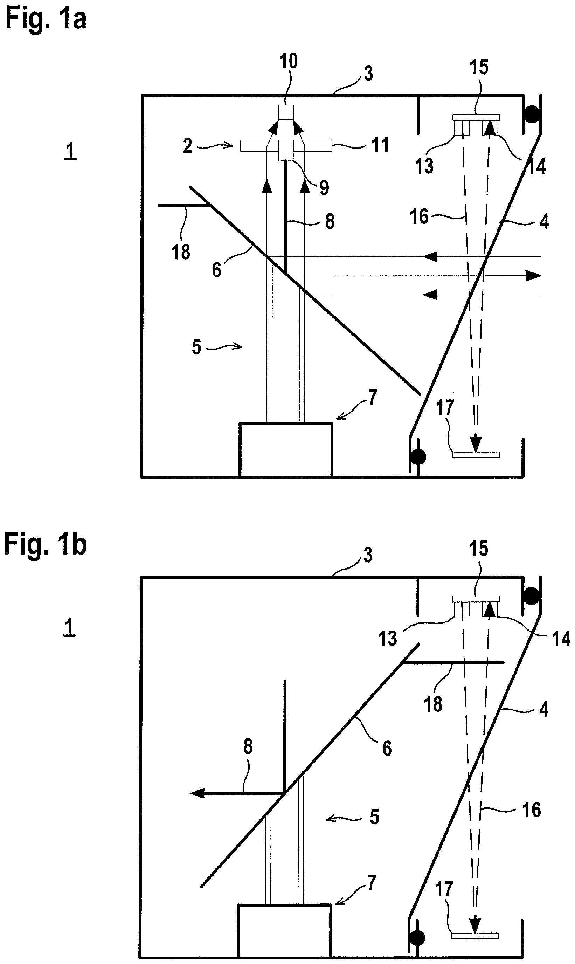

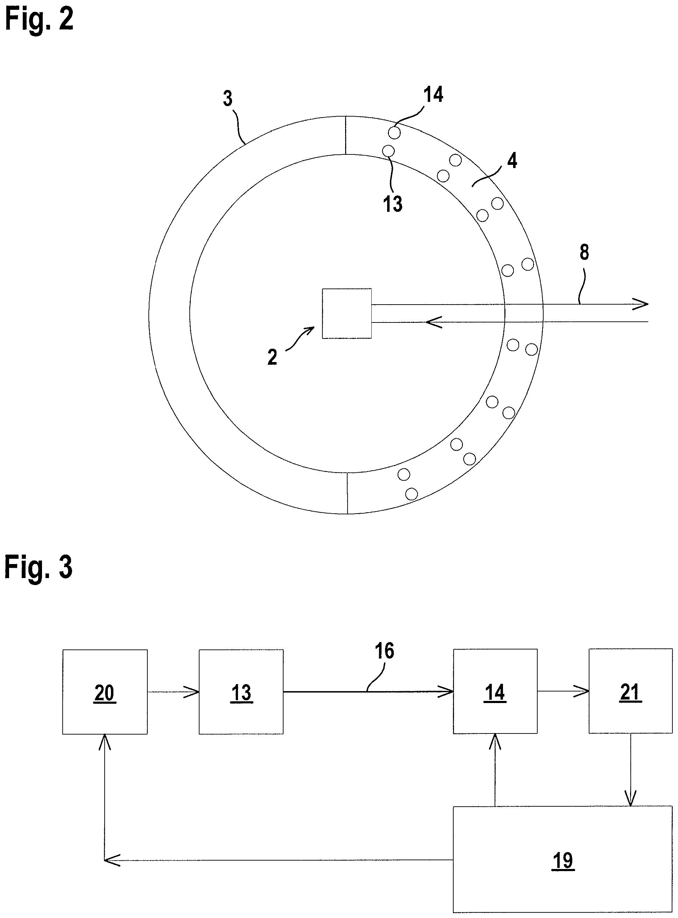

Die Figuren 1a, 1b und 2 zeigen ein Ausführungsbeispiel eines optischen Sensors in Form eines Flächendistanzsensors. Dieser optische Sensor 1 dient zur Erfassung von Objekten in einem Überwachungsbereich. Hierzu weist der optische Sensor 1 eine Sende-/Empfangseinheit 2 auf, die in einem Gehäuse 3 integriert ist. Ein Teil der Gehäusewand ist von einer lichtdurchlässigen Scheibe 4 gebildet, die sich in Umfangsrichtung des Gehäuses 3 über einen Winkelbereich von 180° erstreckt. Die Scheibe 4 verläuft, wie die Figuren 1a, 1b zeigen, vom oberen zum unteren Rand schräg nach innen.

Der Sende-/Empfangseinheit 2 ist eine Ablenkeinheit 5 zugeordnet, die einen um eine vertikale Drehachse drehbaren Ablenkspiegel 6 aufweist. Der Ablenkspiegel 6 wird mittels eines Motors 7 in eine Drehbewegung versetzt.

Die Sende-/Empfangseinheit 2 weist einen Lichtstrahlen 8 emittierenden Sender 9 in Form einer Laserdiode auf. Weiterhin weist die Sende-/Empfangseinheit 2 einen Empfänger 10 auf, dem eine Empfangsoptik 11 vorgeordnet ist. Zur Durchführung der Objektdetektion werden die vom Sender 9 emittierten Lichtstrahlen 8 durch die Scheibe 4 in den Überwachungsbereich geführt. Die von einem Objekt zurückreflektierten Lichtstrahlen 8 werden durch die Scheibe 4 geführt und gelangen über die Empfangsoptik 11 zum Empfänger 10, der von einer Photodiode gebildet sein kann. Durch die Ablenkung an dem rotierenden Ablenkspiegel 6 werden die Lichtstrahlen 8 periodisch in einem flächigen Überwachungsbereich geführt, der sich über einen Winkelbereich von 180° erstreckt.

Der optische Sensor 1 ist im vorliegenden Fall in Form eines nach dem Impuls-Laufzeit-Verfahren arbeitenden Distanzsensors ausgebildet. Hierzu emittiert der Sender 9 Lichtstrahlen 8 in Form von Folgen kurzer Lichtimpulse. Zur Distanzbestimmung wird die Laufzeit der Lichtimpulse zum Objekt und wieder zurück gemessen. Diese Auswertung erfolgt in einer nicht dargestellten Auswerteeinheit. In der Auswerteeinheit wird auch die aktuelle Ablenkposition der Lichtstrahlen 8 erfasst. Daraus und aus den aktuellen Positionswerten können die Positionen von Objekten im Überwachungsbereich erfasst werden.

Der optische Sensor 1 kann als Sicherheitssensor ausgebildet sein. Hierzu weist die Auswerteeinheit einen redundanten Aufbau auf, vorzugsweise in Form zweier sich zyklisch gegenseitig überwachender Rechnereinheiten.

Zur Durchführung einer Scheibenüberwachung, das heißt zur Überprüfung, ob die Scheibe 4 verschmutzt oder beschädigt und damit hinsichtlich ihrer Lichtdurchlässigkeit beeinträchtigt ist, ist eine Testeinheit vorgesehen.

Die Testeinheit umfasst mehrere Paare von Testsendern 13 und Testdetektoren 14, die auf der Oberseite einer im Sockel 2 stationär angeordneten Platine 15 angeordnet sind. Die Anzahl der Paare von Testsendern 13 und Testdetektoren 14 ist so gewählt, dass mit diesen die Scheibe 4 in Umfangsrichtung vollständig erfasst wird.

Die Testsender 13 sind, wie Figur 1a zeigt, so angeordnet, dass von ihnen emittierte Testlichtstrahlen 16 die Scheibe 4 an verschiedenen Bereichen durchsetzen und dann auf einen Reflektor 17 geführt sind, der am unteren Rand der Scheibe 4 außenliegend am Gehäuse 3 angeordnet ist.

Die am Reflektor 17 reflektierten Testlichtstrahlen 16 durchsetzen mehrmals die Scheibe 4 und sind dann zu dem den jeweiligen Testsender 13 zugeordneten Testdetektor 14 geführt. Die Testlichtstrahlen 16 durchsetzen dabei die Scheibe 4 in den Bereichen, in denen auch die Lichtstrahlen 8 der Sende-/Empfangseinheit 2 die Scheibe 4 durchsetzen.

Mit der so ausgebildeten Testeinheit erfolgt eine Kontrolle der Verschmutzung der Scheibe 4.

In der Auswerteeinheit erfolgt zweckmäßig eine Schwellenwertbewegung der Empfangssignale der Testdetektoren 14. Auf diese Weise wird festgestellt, ob einzelne Bereiche oder die gesamte Scheibe 4 in ihrer Lichtdurchlässigkeit beeinträchtigt ist. Ist dies der Fall, wird in der Auswerteeinheit eine Stör- oder Warnmeldung generiert.

Zur Durchführung einer Fehlerkontrolle der Testeinheit ist an dem Ablenkspiegel 6 ein Referenzelement 18 befestigt, und zwar an dessen Rückseite.

Das Referenzelement 18 weist eine definierte Transmission für die Testlichtstrahlen 16 auf. Diese kann über das gesamte Referenzelement 18 konstant sein oder in Drehrichtung der Ablenkeinheit 5 räumlich variieren.

Durch die Drehbewegung wird das Referenzelement 18 nacheinander in den Strahlengang der Testlichtstrahlen 16 der einzelnen Testsender 13 der Testeinheit eingebracht, wie Figur 1b veranschaulicht.

Durch das Referenzelement 18 wird nur ein definierter Teil der Testlichtstrahlen 16 zurück zum zugeordneten Testdetektor 14 geführt.

Die so mit dem Referenzelement 18 durchgeführten Referenzmessungen werden für eine Fehlerkontrolle derart genutzt, dass Messfehler der Testeinheit aufgrund von Temperaturschwankungen derer Bauteile kompensiert werden.

Die Referenzmessungen werden für alle Paare von Testsendern 13 und Testdetektoren 14 in identischer Weise durchgeführt. Durch die paarweise Ablenkbewegung der Ablenkeinheit 5 erfolgen diese Referenzmessungen zyklisch.

Hierzu werden mit dem Referenzelement 18 durchgeführte Referenzmessungen Referenzmesswerte für die Messungen zur Überprüfung der Durchlässigkeit der Scheibe 4 gewonnen.

Dabei werden aus den Referenzmesswerten Korrekturfaktoren für die Messungen, die mit der Testeinheit zur Überprüfung der Durchlässigkeit der Scheibe 4 durchgeführt werden, abgeleitet.

Figur 3 zeigt ein Blockschaltbild der weiteren Komponenten zur Fehlerkorrektur.

Die bei der Referenzmessung mit dem Referenzelement 18 erhaltenen Empfangssignale des jeweiligen Testdetektors 14 werden einer Steuerung 19 zugeführt. Die Steuerung 19 kann Bestandteil der Auswerteeinheit sein. Anhand dieser Empfangssignale des Testdetektors 14 werden Korrekturfaktoren berechnet. Mit den so ermittelten Korrekturfaktoren wird eine Sendersteuerung 20 der zugeordneten Testsender 13 angesteuert. Zusätzlich oder alternativ wird die Verstärkung eines dem Testdetektor 14 zugeordneten Verstärkers 21 abhängig von den Korrekturfaktoren verändert. Durch diese Fehlerkontrolle werden somit fortlaufend temperaturbedingte Schwankungen der Testeinheit kompensiert, so dass bei der darauf durchzuführenden Verschmutzungsüberwachung kompensierte Messwerte erhalten werden.

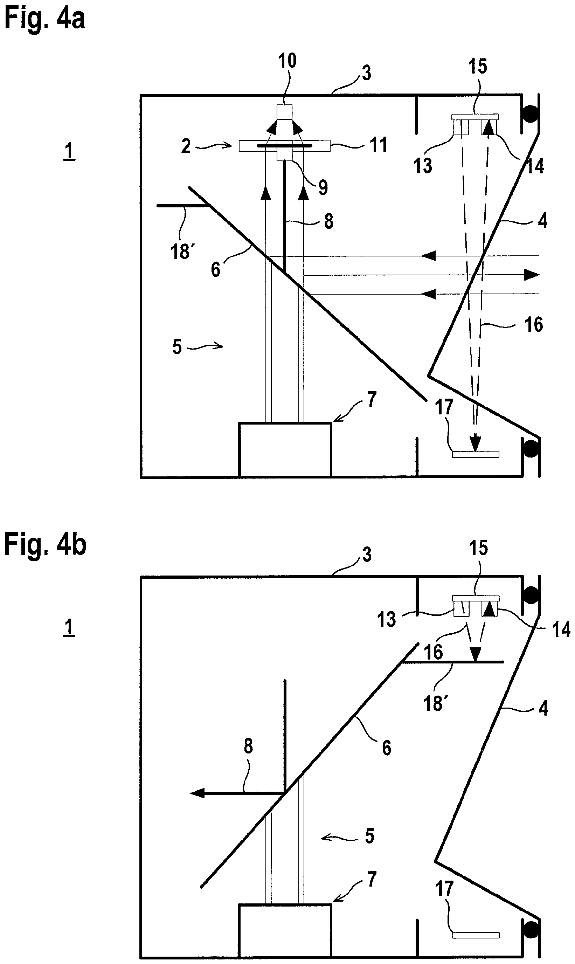

Die Figuren 4a, 4b zeigen ein zweites Ausführungsbeispiel des erfindungsgemäßen optischen Sensors. Dieses Ausführungsbeispiel unterscheidet sich von der Ausführungsform der Figuren 1a, 1b nur dadurch, dass die Scheibe 4 nun einen winkligen Querschnitt aufweist, und dass anstelle des in Transmission arbeitenden Referenzelements 18 nur ein in Reflexion arbeitendes Referenzelement 18' vorgesehen ist. Das Referenzelement 18' weist eine definierte Reflexivität auf, die entweder konstant ist oder in Drehrichtung der Ablenkeinheit 5 variiert.

Während bei der Anordnung der Figuren 1a, 1b die Referenzmessung mit dem Referenzelement 18 Transmissionsmessungen sind, und die Referenzmessungen mit dem Referenzelement 18' der Ausführungsform gemäß den Figuren 4a, 4b als Reflexionsmessungen ausgebildet sind, das heißt es wird, wie Figur 4b zeigt, zur Fehlerkontrolle das von einem Testsender 13 emittierte Testlicht, das vom Referenzelement 18' reflektiert und auf den zugeordneten Testdetektor 14 geführt wird, ausgewertet.

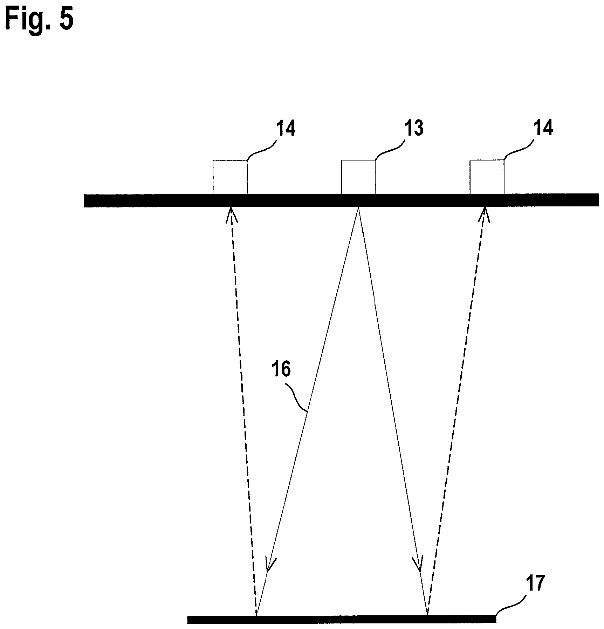

Figur 5 zeigt schematisch einen Ausschnitt einer alternativen Auswertung von Testsendern 13 und Testdetektoren 14 zur Verschmutzungskontrolle. Bei dieser Ausführungsform durchsetzen die Testlichtstrahlen 16 eines Testsenders 13 ein erstes Mal die Scheibe 4 und werden dann zum Reflektor 17 geführt. Anders als bei den Ausführungsformen der Figuren 1a, 1b und 4a, 4b werden die Testlichtstrahlen 16 am Reflektor 17 so zurückreflektiert, dass sie nach einem weiteren Durchsetzen der Scheibe 4 zu zwei benachbarten Testdetektoren 14 geführt sind. Diese Anordnung ist vorteilhaft periodisch fortgesetzt über den gesamten Umfang der Scheibe 4 verteilt.

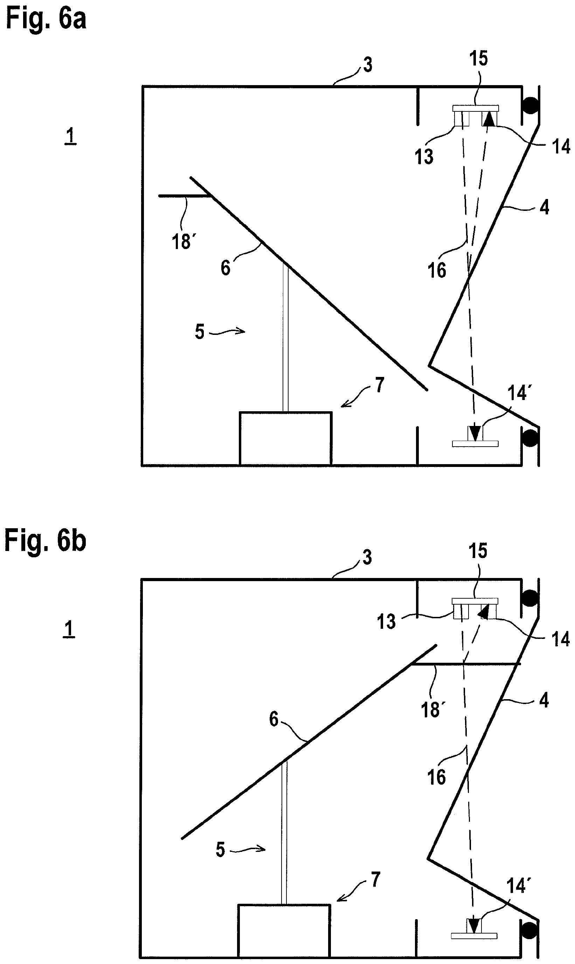

Die Figuren 6a, 6b zeigen ein weiteres Ausführungsbeispiel des erfindungsgemäßen optischen Sensors 1. Dieses Ausführungsbeispiel unterscheidet sich von der Ausführungsform der Figuren 4a, 4b nur hinsichtlich folgender beider Aspekte. Erstens bildet das Referenzelement 18' ein transmissives und reflektierendes Element, wo transmissive und reflektive Bereiche aneinander anschließen können. Weiterhin ist der Reflektor 17 durch einen weiteren Testdetektor 14' ersetzt.

In der in Figur 6a dargestellten Position des Ablenkspiegels 6 sind die Lichtstrahlen der Sende-/Empfangseinheit 2 in den Überwachungsbereich geführt. Die Verschmutzung der Scheibe 4 wird mit der Testeinheit dadurch getestet, dass die Testlichtstrahlen 16 des Testsenders 13 auf die Scheibe 4 geführt sind. Ein Teil der Testlichtstrahlen 16 wird reflektiert und auf den Testdetektor 14 geführt. Der größte Teil der Testlichtstrahlen 16 durchsetzt die Scheibe 4 und gelangt zum Testdetektor 14'. Durch Auswerten der Empfängersignale der Testdetektoren 14, 14' wird die Verschmutzung der Scheibe 4 kontrolliert.

In der in Figur 6b dargestellten Position des Ablenkspiegels 6 befindet sich das Referenzelement 18' im Strahlgang der Testlichtstrahlen 16. Ein Teil der Testlichtstrahlen 16 wird am Referenzelement 18' reflektiert und gelangt zum Testdetektor 14. Der andere Teil der Testlichtstrahlen 16 durchsetzt das Referenzelement 18' und gelangt zum Testdetektor 14'. Die Empfangssignale der Testdetektoren 14, 14' die hierbei erzeugt werden, werden zur Durchführung der Referenzmessungen genutzt.

### Bezugszeichenliste

- (1): Optischer Sensor
- (2): Sende-/Empfangseinheit
- (3): Gehäuse
- (4): Scheibe
- (5): Ablenkeinheit
- (6): Ablenkspiegel
- (7): Motor
- (8): Lichtstrahlen
- (9): Sender
- (10): Empfänger
- (11): Empfangsoptik
- (13): Testsender
- (14): Testdetektor
- (15): Platine
- (16): Testlichtstrahlen
- (17): Reflektor
- (18): Referenzelement
- (18'): Referenzelement
- (19): Steuerung
- (20): Sendersteuerung
- (21): Verstärker

## Patentansprüche

1. Optischer Sensor (1) zur Erfassung von Objekten in einem Überwachungsbereich mit einem Gehäuse (3) und einer innerhalb des Gehäuses (3) angeordneten Sende-/Empfangseinheit (2), wobei von einem Sender (9) der Sende-/Empfangseinheit (2) emittierte Lichtstrahlen (8) innerhalb des Überwachungsbereichs geführt sind und dabei eine Scheibe (4) durchsetzen, wobei von einem Objekt zurückreflektierte Lichtstrahlen (8) durch die Scheibe (4) zu einem Empfänger (10) der Sende-/Empfangseinheit (2) geführt sind und in einer Auswerteeinheit Empfangssignale des Empfängers (10) zur Generierung eines Objektfeststellungsignals ausgewertet werden, und wobei eine Testeinheit zur Überprüfung der Durchlässigkeit der Scheibe (4) vorgesehen ist, welche wenigstens einen Testlichtstrahlen (16) emittierenden Testsender (13) und einen Testdetektor (14 oder 14') aufweist, wobei die Testlichtstrahlen (16) auf die Scheibe (4) ausgerichtet sind, wobei
ein Referenzelement (18) mit definierten Transmissions- und/oder Reflexionseigenschaften vorgesehen ist, wobei eine Fehlerkontrolle der Testeinheit bei im Strahlengang der Testlichtstrahlen (16) eingebrachtem Referenzelement (18) erfolgt,
wobei bei mit dem Referenzelement (18) durchgeführten Referenzmessungen Referenzmesswerte für die Messungen zur Überprüfung der Durchlässigkeit der Scheibe (4) gewonnen werden, **dadurch gekennzeichnet, dass** aus den Referenzmesswerten Korrekturfaktoren für die Messungen, die mit der Testeinheit zur Überprüfung der Durchlässigkeit der Scheibe (4) durchgeführt werden, abgeleitet werden, wobei mittels der Korrekturfaktoren die Sendeleistung des Testsenders (13) oder die Verstärkung von Empfangssignalen des Testdetektors (14) korrigiert wird.

2. Optischer Sensor (1) nach Anspruch 1, **dadurch gekennzeichnet, dass** die Fehlerkontrolle in Form einer Korrektur von Schwankungen von Eigenschaften der Testeinheit ausgebildet ist.

3. Optischer Sensor (1) nach einem der Ansprüche 1 oder 2, **dadurch gekennzeichnet, dass** Empfangssignale des Testdetektors (14 und/oder 14') zur Fehlerkontrolle herangezogen werden, wenn vom Referenzelement (18') die Testlichtstrahlen (16) zu diesem reflektiert werden.

4. Optischer Sensor (1) nach einem der Ansprüche 1 oder 2, **dadurch gekennzeichnet, dass** Empfangssignale des Testdetektors (14) zur Fehlerkontrolle herangezogen werden, wenn ein definierter Teil der Testlichtstrahlen (16) das Referenzelement (18) durchsetzt und zum Testdetektor (14 und/oder 14') geführt ist.

5. Optischer Sensor (1) nach einem der Ansprüche 1 oder 2, **dadurch gekennzeichnet, dass** das Referenzelement (18') transmissive und reflektive Eigenschaften aufweist, und dass zur Fehlerkontrolle Empfangssignale eines Testdetektors (14'), auf welchen das Referenzelement (18') durchsetzende Testlichtstrahlen (16) geführt sind, und eines Testdetektors (14), auf welchen am Referenzelement (18') reflektierte Testlichtstrahlen (16) geführt sind, herangezogen werden.

6. Optischer Sensor (1) nach einem der Ansprüche 1 bis 5, **dadurch gekennzeichnet, dass** das Referenzelement (18) stationär zum Testdetektor (14 und/oder 14') angeordnet ist.

7. Optischer Sensor (1) nach einem der Ansprüche 1 bis 6, **dadurch gekennzeichnet, dass** das Referenzelement (18) relativ zum Testdetektor (14) bewegt ist, so dass das Referenzelement (18) zu vorgegebenen Zeiten in den Strahlengang der Testlichtstrahlen (16) eingebracht ist.

8. Optischer Sensor (1) nach Anspruch 7, **dadurch gekennzeichnet, dass** das Referenzelement (18) periodisch relativ zum Testdetektor (14) bewegt ist.

9. Optischer Sensor (1) nach einem der Ansprüche 1 bis 8, **dadurch gekennzeichnet, dass** die Sende-/Empfangseinheit (2) stationär im Gehäuse (3) angeordnet ist, und dass die Lichtstrahlen (8) über eine um eine Drehachse rotierende Ablenkeinheit (5) geführt sind.

10. Optischer Sensor (1) nach Anspruch 9, **dadurch gekennzeichnet, dass** das Referenzelement (18) mit der Ablenkeinheit (5) mitrotiert, so dass in vorgegebenen Winkelstellungen der Ablenkeinheit (5) das Referenzelement (18) in den Strahlengang der Testlichtstrahlen (16) eingebracht ist.

11. Optischer Sensor (1) nach einem der Ansprüche 8 bis 10, **dadurch gekennzeichnet, dass** das Referenzelement (18) örtlich variierende Reflexions- oder Transmissionseigenschaften aufweist, welche für unterschiedliche Messungen zur Fehlerkontrolle der Testeinheit herangezogen werden.

12. Optischer Sensor (1) nach einem der Ansprüche 1 bis 11, **dadurch gekennzeichnet, dass** die Testeinheit eine Mehrfachanordnung von Testlichtstrahlen (16) emittierenden Testsendern (13) und Testdetektoren (14) aufweist, wobei jedem Testsender (13) ein oder mehrere Testdetektoren (14) zur Überprüfung der Durchlässigkeit unterschiedlicher Bereiche der Scheibe (4) zugeordnet ist beziehungsweise sind.

13. Optischer Sensor (1) nach Anspruch 12, **dadurch gekennzeichnet, dass** die Testsender (13) mit den zugeordneten Testdetektoren (14) Module bilden, die zeitlich versetzt oder parallel aktiviert sind.

## Claims

1. An optical sensor (1) for detecting objects in a monitoring area, having a housing (3) and a transmitting/receiving unit (2) arranged inside the housing (3), light beams (8) emitted by a transmitter (9) of the transmitting/receiving unit (2) being guided inside the monitoring area and passing through a disc (4), wherein light beams (8) reflected back from an object are guided through the disc (4) to a receiver (10) of the transmitter/receiver unit (2) and received signals of the receiver (10) are evaluated in an evaluation unit to generate an object detection signal, and wherein a test unit for checking the permeability of the disc (4) is provided, which has at least one test transmitter (13) emitting test light beams (16) and a test detector (14 or 14'), wherein the test light beams (16) are aligned with the disc (4), wherein a reference element (18) with defined transmission and/or reflection properties is provided, wherein an error check of the test unit is carried out with the reference element (18) introduced in the beam path of the test light beams (16), wherein reference measurement values for the measurements for checking the permeability of the disc (4) are obtained from reference measurements carried out with the reference element (18), **characterised in that** correction factors for the measurements which are carried out with the test unit for checking the permeability of the disc (4) are derived from the reference measurement values, the transmission power of the test transmitter (13) or the amplification of received signals of the test detector (14) being corrected by means of the correction factors.

2. An optical sensor (1) according to claim 1, **characterised in that** the error control is designed in the form of a correction of fluctuations of properties of the test unit.

3. An optical sensor (1) according to one of the claims 1 or 2, **characterised in that** received signals of the test detector (14 and/or 14') are used for error control when the test light beams (16) are reflected to the reference element (18').

4. An optical sensor (1) according to one of the claims 1 or 2, **characterised in that** received signals of the test detector (14) are used for error control when a defined part of the test light beams (16) passes through the reference element (18) and is guided to the test detector (14 and/or 14').

5. An optical sensor (1) according to one of the claims 1 or 2, **characterised in that** the reference element (18') has transmissive and reflective properties, and **in that**, for error control, received signals from a test detector (14'), to which test light beams (16) passing through the reference element (18') are guided, and from a test detector (14), to which test light beams (16) reflected at the reference element (18') are guided, are used.

6. An optical sensor (1) according to one of claims 1 to 5, **characterised in that** the reference element (18) is arranged stationary relative to the test detector (14 and/or 14').

7. An optical sensor (1) according to one of the claims 1 to 6, **characterised in that** the reference element (18) is moved relative to the test detector (14) so that the reference element (18) is introduced into the beam path of the test light beams (16) at predetermined times.

8. An optical sensor (1) according to claim 7, **characterised in that** the reference element (18) is periodically moved relative to the test detector (14).

9. An optical sensor (1) according to one of the claims 1 to 8, **characterised in that** the transmitting/receiving unit (2) is arranged in a stationary manner in the housing (3), and **in that** the light beams (8) are guided via a deflection unit (5) rotating about an axis of rotation.

10. An optical sensor (1) according to claim 9, **characterised in that** the reference element (18) rotates with the deflection unit (5), so that in predetermined angular positions of the deflection unit (5) the reference element (18) is introduced into the beam path of the test light beams (16).

11. An optical sensor (1) according to one of the claims 8 to 10, **characterised in that** the reference element (18) has locally varying reflection or transmission properties which are used for different measurements for error control of the test unit.

12. An optical sensor (1) according to one of claims 1 to 11, **characterised in that** the test unit has a multiple arrangement of test transmitters (13) emitting test light beams (16) and test detectors (14), each test transmitter (13) being assigned one or more test detectors (14) for checking the transmittance of different regions of the disc (4).

13. An optical sensor (1) according to claim 12, **characterised in that** the test transmitters (13) with the associated test detectors (14) form modules which are activated with a time offset or in parallel.

## Revendications

1. Capteur optique (1) pour détecter des objets dans une zone de surveillance, comportant un boîtier (3) et une unité d'émission/réception (2) disposée à l'intérieur du boîtier (3), des faisceaux lumineux (8) émis par un émetteur (9) de l'unité d'émission/réception (2) étant guidés à l'intérieur de la zone de surveillance et traversant un disque (4), dans lequel les faisceaux lumineux (8) réfléchis par un objet sont guidés à travers le disque (4) vers un récepteur (10) de l'unité d'émission/réception (2) et les signaux reçus du récepteur (10) sont évalués dans une unité d'évaluation pour générer un signal de détection d'objet, et dans lequel il est prévu une unité de test pour contrôler la perméabilité du disque (4), qui présente au moins un émetteur de test (13) émettant des faisceaux lumineux de test (16) et un détecteur de test (14 ou 14'), les faisceaux lumineux de test (16) étant alignés avec le disque (4), dans lequel un élément de référence (18) avec des propriétés de transmission et/ou de réflexion définies est prévu, dans lequel un contrôle d'erreur de l'unité de test est effectué avec l'élément de référence (18) introduit dans la trajectoire des rayons lumineux de test (16), dans lequel des valeurs de mesure de référence pour les mesures de contrôle de la perméabilité du disque (4) sont obtenues à partir de mesures de référence effectuées avec l'élément de référence (18), **caractérisé en ce que** des facteurs de correction pour les mesures effectuées avec l'unité de test pour le contrôle de la perméabilité du disque (4) sont dérivés des valeurs de mesure de référence, la puissance d'émission de l'émetteur de test (13) ou l'amplification des signaux de réception du détecteur de test (14) étant corrigée au moyen des facteurs de correction.

2. Capteur optique (1) selon la revendication 1, **caractérisé en ce que** le contrôle d'erreur est conçu sous la forme d'une correction des fluctuations des propriétés de l'unité de test.

3. Capteur optique (1) selon l'une des revendications 1 ou 2, **caractérisé en ce que** les signaux reçus du détecteur de test (14 et/ou 14') sont utilisés pour le contrôle d'erreur lorsque les faisceaux lumineux de test (16) sont réfléchis vers l'élément de référence (18').

4. Capteur optique (1) selon l'une des revendications 1 ou 2, **caractérisé en ce que** les signaux reçus du détecteur de test (14) sont utilisés pour le contrôle d'erreur lorsqu'une partie définie des faisceaux lumineux de test (16) traverse l'élément de référence (18) et est guidée vers le détecteur de test (14 et/ou 14').

5. Capteur optique (1) selon l'une des revendications 1 ou 2, **caractérisé en ce que** l'élément de référence (18') présente des propriétés de transmission et de réflexion, et **en ce que**, pour le contrôle d'erreur, on utilise des signaux reçus d'un détecteur de test (14'), vers lequel sont guidés des faisceaux lumineux de test (16) traversant l'élément de référence (18'), et d'un détecteur de test (14), vers lequel sont guidés des faisceaux lumineux de test (16) réfléchis sur l'élément de référence (18').

6. Capteur optique (1) selon l'une des revendications 1 à 5, **caractérisé en ce que** l'élément de référence (18) est disposé de manière fixe par rapport au détecteur de test (14 et/ou 14').

7. Capteur optique (1) selon l'une des revendications 1 à 6, **caractérisé en ce que** l'élément de référence (18) est déplacé par rapport au détecteur de test (14) de sorte que l'élément de référence (18) est introduit dans le trajet des faisceaux lumineux de test (16) à des moments prédéterminés.

8. Capteur optique (1) selon la revendication 7, **caractérisé en ce que** l'élément de référence (18) est déplacé périodiquement par rapport au détecteur de test (14).

9. Capteur optique (1) selon l'une des revendications 1 à 8, **caractérisé en ce que** l'unité d'émission/réception (2) est disposée de manière fixe dans le boîtier (3), et **en ce que** les faisceaux lumineux (8) sont guidés par une unité de déviation (5) tournant autour d'un axe de rotation.

10. Capteur optique (1) selon la revendication 9, **caractérisé en ce que** l'élément de référence (18) tourne avec l'unité de déviation (5), de sorte que dans des positions angulaires prédéterminées de l'unité de déviation (5), l'élément de référence (18) est introduit dans la trajectoire des faisceaux lumineux de test (16).

11. Capteur optique (1) selon l'une des revendications 8 à 10, **caractérisé en ce que** l'élément de référence (18) présente des propriétés de réflexion ou de transmission localement variables qui sont utilisées pour différentes mesures pour le contrôle d'erreur de l'unité de test.

12. Capteur optique (1) selon l'une des revendications 1 à 11, **caractérisé en ce que** l'unité de test présente un agencement multiple d'émetteurs de test (13) émettant des faisceaux lumineux de test (16) et de détecteurs de test (14), chaque émetteur de test (13) étant associé à un ou plusieurs détecteurs de test (14) pour vérifier la transmittance de différentes régions du disque (4).

13. Capteur optique (1) selon la revendication 12, **caractérisé en ce que** les émetteurs de test (13) avec les détecteurs de test associés (14) forment des modules qui sont activés avec un décalage temporel ou en parallèle.
